# EUROPÄISCHE PATENTSCHRIFT

(11) **EP 2 939 756 B1**
(45) Veröffentlichungstag und Bekanntmachung des Hinweises auf die Patenterteilung: **06.07.2016**
(21) Anmeldenummer: 14166860.8
(22) Anmeldetag: 02.05.2014
(51) Int. Cl.: B21D 37/14, B23Q 3/155, G05B 19/4093

(54) **Werkzeugmaschine zum Bearbeiten eines Werkstücks mit einer Werkzeughandlingvorrichtung und einem Werkzeugmagazin sowie Verfahren und Bearbeitungsprgramm zum Betreiben einer derartigen Werkzeugmaschine**
Machine tool for machining a workpiece with a device for handling the tools and a tool storage magazine and method and working program for operating such a machine tool
Machine-outil de traitement d'une pièce à usiner avec un dispositif de changement d'outil et un magasin d'outils ainsi que procédé de mise en oeuvre et programme de fonctionnement d'une telle machine-outil

(43) Veröffentlichungstag der Anmeldung: 04.11.2015
(73) Patentinhaber: TRUMPF Werkzeugmaschinen GmbH + Co. KG, 71254 Ditzingen (DE)
(72) Erfinder: Klinkhammer, Marc, 71254 Ditzingen (DE); Kerscher, Stefan, 75045 Walzbachtal (DE)
(74) Vertreter: Kohler Schmid Möbus Patentanwälte

(56) Entgegenhaltungen:
- EP-A1- 0 927 600
- EP-A1- 2 198 991
- EP-A1- 2 692 455
- EP-A1- 2 724 797
- US-A- 5 669 866

## Beschreibung

Die Erfindung betrifft eine Werkzeugmaschine zum Bearbeiten eines Werkstücks, insbesondere eines Blechs,
- mit einer Bearbeitungsstation, die eine Werkzeugaufnahme aufweist, an welcher ein Bearbeitungswerkzeug zur Bearbeitung des Werkstücks ein- und auswechselbar ist,
- mit einem Werkzeugspeicher, der wenigstens einen Speicherplatz für ein Bearbeitungswerkzeug aufweist,
- mit einer Werkzeughandlingvorrichtung, die mittels eines gesteuerten Antriebs in eine Übergabe-/Übernahmeposition bewegbar ist,
- mit einer Bewegungseinheit, mittels derer das Werkstück und der Werkzeugspeicher bewegbar sind und die mittels eines gesteuerten Antriebs einerseits in eine Rüstposition und andererseits in eine Betriebsposition in Form einer Bearbeitungsposition und/oder in eine Betriebsposition in Form einer Werkzeugwechselposition bewegbar ist,
- mit einer für den Antrieb der Werkzeughandlingvorrichtung vorgesehenen Steuerungsvorrichtung, mittels derer die Übergabe-/Übernahmeposition der Werkzeughandlingvorrichtung definierbar ist sowie
- mit einer für den Antrieb der Bewegungseinheit vorgesehenen Steuerungsvorrichtung, mittels derer einerseits die Rüstposition und andererseits die Bearbeitungsposition und/oder die Werkzeugwechselposition der Bewegungseinheit definierbar sind,
wobei
- bei Rüstposition der Bewegungseinheit der Speicherplatz des Werkzeugspeichers mittels der Bewegungseinheit in eine Position bewegt ist, in welcher bei gleichzeitiger Übergabe-/Übernahmeposition der Werkzeughandlingvorrichtung mittels der Werkzeughandlingvorrichtung ein Bearbeitungswerkzeug dem Speicherplatz des Werkzeugspeichers zuführbar und/oder von dem Speicherplatz des Werkzeugspeichers abführbar ist,
- bei Bearbeitungsposition der Bewegungseinheit das mit der Bewegungseinheit bewegungsverbundene Werkstück mittels der Bewegungseinheit in eine Position bewegt ist, in welcher das Werkstück an einer hierfür vorgesehenen Stelle mittels des in die Werkzeugaufnahme der Bearbeitungsstation eingewechselten Bearbeitungswerkzeugs bearbeitbar ist und
- bei Werkzeugwechselposition der Bewegungseinheit der mit der Bewegungseinheit bewegungsverbundene Werkzeugspeicher mittels der Bewegungseinheit in eine Position bewegt ist, in welcher an der Bearbeitungsstation ein einzuwechselndes Bearbeitungswerkzeug von dem Speicherplatz des Werkzeugspeichers an die Werkzeugaufnahme der Bearbeitungsstation übergebbar ist oder ein auszuwechselndes Bearbeitungswerkzeug von der Werkzeugaufnahme der Bearbeitungsstation an den Speicherplatz des Werkzeugspeichers übergebbar ist.

Die Erfindung betrifft außerdem ein Verfahren zum Betreiben einer Werkzeugmaschine zum Bearbeiten eines Werkstücks, insbesondere eines Blechs, wobei die Werkzeugmaschine
- eine Bearbeitungsstation mit einer Werkzeugaufnahme, an welcher ein Bearbeitungswerkzeug zur Bearbeitung des Werkstücks ein- und auswechselbar ist,
- einen Werkzeugspeicher mit wenigstens einem Speicherplatz für ein Bearbeitungswerkzeug,
- eine Werkzeughandlingvorrichtung mit einem mittels einer Steuerungsvorrichtung gesteuerten Antrieb sowie
- eine mit dem Werkstück und mit dem Werkzeugspeicher bewegungsverbundene Bewegungseinheit mit einem mittels einer Steuerungsvorrichtung gesteuerten Antrieb
   aufweist und wobei im Rahmen des Verfahrens
- einerseits zum Rüsten des Werkzeugspeichers die Bewegungseinheit in eine von der Steuerungsvorrichtung des Antriebs der Bewegungseinheit definierte Rüstposition und die Werkzeughandlingvorrichtung in eine von der Steuerungsvorrichtung des Antriebs der Werkzeughandlingvorrichtung definierte Übergabe-/Übernahmeposition bewegt werden, wobei bei Rüstposition der Bewegungseinheit und bei gleichzeitiger Übergabe-/Übernahmeposition der Werkzeughandlingvorrichtung mittels der Werkzeughandlingvorrichtung ein Bearbeitungswerkzeug dem Speicherplatz des Werkzeugspeichers zuführbar und/oder von dem Speicherplatz des Werkzeugspeichers abführbar ist und andererseits
- die Bewegungseinheit in eine von der Steuerungsvorrichtung des Antriebs der Bewegungseinheit definierte Betriebsposition in Form einer Bearbeitungsposition und dadurch das mit der Bewegungseinheit bewegungsverbundene Werkstück in eine Position bewegt wird, in welcher das Werkstück an einer hierfür vorgesehenen Stelle mittels des in die Werkzeugaufnahme der Bearbeitungsstation eingewechselten Bearbeitungswerkzeugs bearbeitbar ist und/oder
- die Bewegungseinheit in eine von der Steuerungsvorrichtung des Antriebs der Bewegungseinheit definierte Betriebsposition in Form einer Werkzeugwechselposition und dadurch der mit der Bewegungseinheit bewegungsverbundene Werkzeugspeicher in eine Position bewegt wird, in welcher an der Bearbeitungsstation ein einzuwechselndes Bearbeitungswerkzeug von dem Speicherplatz des Werkzeugspeichers an die Werkzeugaufnahme der Bearbeitungsstation übergebbar ist oder ein auszuwechselndes Bearbeitungswerkzeug von der Werkzeugaufnahme der Bearbeitungsstation an den Speicherplatz des Werkzeugspeichers übergebbar ist.

Die Erfindung betrifft weiterhin ein Bearbeitungsprogramm zum Betreiben einer Werkzeugmaschine der vorstehenden Art, ein Verfahren zum Erstellen eines derartigen Bearbeitungsprogramms sowie ein Computerprogrammprodukt mit Kodierungsmitteln zum Durchführen aller Schritte des letztgenannten Verfahrens.

Eine gattungsgemäße Werkzeugmaschine und ein gattungsgemäßes Verfahren sind bekannt aus EP 2 198 991 A1. Der Stand der Technik betrifft eine Werkzeugmaschine mit einem C-förmigen Maschinengestell, das einen oberen Gestellschenkel und einen unteren Gestellschenkel aufweist. An den freien Enden der beiden Gestellschenkel ist eine Bearbeitungsstation vorgesehen, die ihrerseits eine obere Werkzeugaufnahme an dem oberen Gestellschenkel sowie eine untere Werkzeugaufnahme an dem unteren Gestellschenkel umfasst. In einem Schenkelzwischenraum zwischen dem oberen Gestellschenkel und dem unteren Gestellschenkel ist eine Koordinatenführung mit einer horizontalen Querschiene vorgesehen, die sich in Querrichtung der beiden Gestellschenkel erstreckt und die motorisch angetrieben und numerisch gesteuert in beiden Achsrichtungen einer horizontalen Bewegungsebene verfahren kann. Entlang der Querschiene der Koordinatenführung sind mehrere Spannpratzen und mehrere Werkzeughalter nebeneinander angebracht. Die Spannpratzen dienen zur lösbaren Fixierung eines Blechs an der Querschiene. Die Werkzeughalter bilden einen an der Querschiene vorgesehenen Werkzeugspeicher, der zur Aufnahme von Bearbeitungswerkzeugen bestimmt ist. Ein an der Querschiene mittels der Spannpratzen fixiertes Blech wird zu Bearbeitungszwecken durch entsprechende Bewegungen der Querschiene gegenüber der Bearbeitungsstation und den in die Werkzeugaufnahmen der Bearbeitungsstation eingewechselten Bearbeitungswerkzeugen positioniert. Außerdem verfährt die Querschiene gegenüber der Bearbeitungsstation des Maschinengestells in Positionen, in welchen zum Werkzeugwechsel Bearbeitungswerkzeuge zwischen den Werkzeugaufnahmen der Bearbeitungsstation und dem an der Querschiene vorgesehenen Werkzeugspeicher transferiert werden.

In Abhängigkeit von der jeweiligen Bearbeitungsaufgabe ist der Werkzeugspeicher an der Querschiene mit Bearbeitungswerkzeugen zu bestücken. Zu diesem Zweck wird die Querschiene an dem Maschinengestell der vorbekannten Werkzeugmaschine in eine fest vorgegebene Rüstposition an dem hinteren Ende des Schenkelzwischenraums zwischen dem oberen Gestellschenkel und dem unteren Gestellschenkel des Maschinengestells bewegt. Dabei kann die Querschiene die feste Rüstposition vor oder nach einer Werkstückbearbeitung oder auch vor oder nach einem Werkzeugwechsel an der Bearbeitungsstation anfahren. Befindet sich die Querschiene in der Rüstposition, so sind die an der Querschiene vorgesehenen Werkzeughalter für eine Werkzeughandlingvorrichtung zugänglich, die ihrerseits von einer Blechbelade- und Blechentladeeinheit der vorbekannten Werkzeugmaschine gebildet wird. Die Blechbelade- und Blechentladeeinheit transferiert Bearbeitungswerkzeuge zwischen dem Werkzeugspeicher an der Querschiene und einem von dem Maschinengestell der Werkzeugmaschine beabstandeten stationären Werkzeugmagazin. Zu diesem Zweck fährt die Blechbelade- und Blechentladeeinheit eine Übergabe-/Übernahmeposition an, in welcher sie auf den betreffenden Werkzeughalter der Querschiene zugreifen kann.

Während des Rüstens des Werkzeugspeichers an der Querschiene steht die Querschiene still. Die Blechbearbeitung an der Bearbeitungsstation der Werkzeugmaschine ist unterbrochen, ein Werkzeugwechsel an der Bearbeitungsstation ist nicht möglich.

Eine verbesserte Integration des Rüstens eines an einer Bewegungseinheit einer Werkzeugmaschine vorgesehenen Werkzeugspeichers in den gesamten Prozessablauf an der Werkzeugmaschine ist Aufgabe der vorliegenden Erfindung.

Erfindungsgemäß gelöst wird diese Aufgabe durch die Werkzeugmaschine nach Patentanspruch 1, durch das Verfahren nach Patentanspruch 9 zum Betreiben einer Werkzeugmaschine, durch das Bearbeitungsprogramm nach Patentanspruch 10, durch das Verfahren nach Patentanspruch 11 zum Erstellen eines Bearbeitungsprogramms sowie durch das Computerprogrammprodukt nach Patentanspruch 12.

Im Falle der Erfindung werden die Rüstposition der Bewegungseinheit und die darauf abgestimmte Übergabe-/Übernahmeposition der Werkzeughandlingvorrichtung variabel definiert. Dabei wird die Rüstposition der Bewegungseinheit in Abhängigkeit von der oder den Positionen vorgegeben, welche die Bewegungseinheit vor und/oder nach dem Rüstvorgang einnimmt. Bei der Gestaltung des Rüstvorgangs an dem Werkzeugspeicher der Bewegungseinheit werden demnach die an der Werkzeugmaschine vor und/oder nach dem Rüstvorgang ablaufenden Prozesse berücksichtigt. Dadurch wird der gesamte Prozessablauf an der Werkzeugmaschine optimiert. Als Rüstpositionen kommen für die Bewegungseinheit solche Positionen in Frage, denen eine Übergabe-/Übernahmeposition der Werkzeughandlingvorrichtung zugeordnet werden kann.

Um das erfindungsgemäße Verfahren durchzuführen, wird ein hierfür erstelltes Bearbeitungsprogramm auf einer numerischen Maschinensteuerung der erfindungsgemäßen Werkzeugmaschine ausgeführt. Dieses Bearbeitungsprogramm umfasst Steuerbefehle für den Antrieb der Bewegungseinheit und Steuerbefehle für den Antrieb der Werkzeughandlingvorrichtung. Die Steuerbefehle werden im Rahmen des erfindungsgemäßen Verfahrens zum Erstellen des Bearbeitungsprogramms erzeugt. Zum Durchführen der Schritte des letztgenannten Verfahrens dient ein Computerprogrammprodukt mit entsprechenden Kodierungsmitteln. Dieses Computerprogrammprodukt bildet einen wesentlichen Bestandteil eines rechnergestützten Programmiersystems, das seinerseits den Anwender in die Lage versetzt, die Steuerbefehle des erfindungsgemäßen Bearbeitungsprogramms zu generieren.

Besondere Ausführungsarten der Erfindung gemäß den unabhängigen Patentansprüchen ergeben sich aus den abhängigen Patentansprüchen 2 bis 8.

Im Interesse eines möglichst hohen Wirkungsgrades der erfindungsgemäßen Werkzeugmaschine ist der Anteil der Betriebszeit der Werkzeugmaschine, der nicht für die Werkstückbearbeitung genutzt werden kann, zu minimieren.

Zu diesem Zweck ist in bevorzugter Ausgestaltung der Erfindung vorgesehen, dass die Steuerungsvorrichtung des Antriebs der Bewegungseinheit die Rüstposition der Bewegungseinheit derart definiert, dass die Bewegung der Bewegungseinheit zwischen der Rüstposition und der vor der Rüstposition und/oder der nach der Rüstposition von der Bewegungseinheit eingenommenen Betriebsposition möglichst schnell bzw. über eine möglichst kurze Distanz ausgeführt werden kann (Patentansprüche 2, 3). Idealerweise stimmt die Bearbeitungsposition der Bewegungseinheit mit der Rüstposition der Bewegungseinheit überein. In diesem Fall besteht die Möglichkeit, den mit der Bewegungseinheit bewegungsverbundenen Werkzeugspeicher hauptzeitparallel zu rüsten. Sind die Rüstposition der Bewegungseinheit und die Betriebsposition der Bewegungseinheit vor bzw. nach der Rüstposition voneinander verschieden und werden zum Antrieb der Bewegungseinheit schnelle Maschinenachsen genutzt, so ist die Nebenzeit, die mit dem Anfahren der Rüstposition und/oder der dem Rüsten vorausgehenden und/oder der sich an das Rüsten anschließenden Betriebsposition durch die Bewegungseinheit verbunden ist, minimiert.

Damit auch der Rüstvorgang selbst möglichst wenig Zeit in Anspruch nimmt, ist in weiterer Ausgestaltung der Erfindung vorgesehen, dass sich die Werkzeughandlingvorrichtung spätestens dann in der Übergabe-/Übernahmeposition befindet, wenn die Bewegungseinheit die Rüstposition erreicht (Patentanspruch 4). Für die Überführung der Werkzeughandlingvorrichtung in die Übergabe-/Übernahmeposition steht bis zum Erreichen der Rüstposition durch die Bewegungseinheit ein verhältnismäßig langer Zeitraum zur Verfügung, beispielsweise ein Zeitraum, in dem ein Werkstück bearbeitet oder ein Bearbeitungswerkzeug an der Bearbeitungsstation der Werkzeugmaschine gewechselt wird. Ist dieser Zeitraum hinreichend lang, so sind für die Werkzeughandlingvorrichtung Antriebe mit verhältnismäßig geringer Leistung und somit insbesondere kostengünstige Antriebe ausreichend.

Patentanspruch 5 betrifft eine bevorzugte Möglichkeit zur konstruktiven Umsetzung des erfindungsgemäßen Konzepts. Als Bewegungseinheit ist ein Führungsträger einer Führungsvorrichtung, insbesondere einer Koordinatenführung, vorgesehen, die in einem Schenkelzwischenraum zwischen einem oberen Gestellschenkel und einem damit gleichgerichtet verlaufenden unteren Gestellschenkel eines Maschinengestells der Werkzeugmaschine angeordnet ist. Das Maschinengestell kann demnach beispielsweise C-Form besitzen oder auch O-förmig ausgebildet sein. Der Führungsträger erstreckt sich in Querrichtung des oberen und des unteren Gestellschenkels und ist relativ zu den beiden Gestellschenkeln bewegbar. Das zu bearbeitende Werkstück wird an dem Führungsträger beispielsweise mittels Spannpratzen fixiert. Der Werkzeugspeicher an dem Führungsträger kann von einem oder mehreren Werkzeughaltern gebildet werden, die längs des Führungsträgers angebracht sind und dementsprechend ein Linearmagazin bilden. Als Bearbeitungsstation der erfindungsgemäßen Werkzeugmaschine kommen beispielsweise eine Stanzstation oder eine Biegestation in Frage, als Bearbeitungswerkzeuge können dementsprechend Stanzwerkzeuge oder Biegewerkzeuge vorgesehen sein.

Auch für die Werkzeughandlingvorrichtung sind erfindungsgemäß unterschiedliche Bauarten denkbar. Bevorzugt wird gemäß Patentanspruch 6 eine Werkzeughandlingvorrichtung, die mittels des zugehörigen Antriebs in Längsrichtung des oberen Gestellschenkels und des unteren Gestellschenkels in die Übergabe-/ Übernahmeposition zustellbar ist. Insbesondere Werkzeuggreifer kommen erfindungsgemäß als Werkzeughandlingvorrichtung zum Einsatz.

In weiterer bevorzugter Ausgestaltung der Erfindung führt die Werkzeughandlingvorrichtung dem Werkzeugspeicher an der Bewegungseinheit Bearbeitungswerkzeuge aus einem bearbeitungsstationsfernen Werkzeugspeicher zu. Entsprechend können mittels der Werkzeughandlingvorrichtung von dem Werkzeugspeicher der Bewegungseinheit abgeführte Bearbeitungswerkzeuge an den bearbeitungsstationsfernen Werkzeugspeicher übergeben werden (Patentanspruch 7). Als bearbeitungsstationsferne Werkzeugspeicher kommen beispielsweise Werkzeugspeicher in Frage, die an dem Maschinengestell der Werkzeugmaschine montiert sind. Denkbar sind aber auch Werkzeugspeicher, die losgelöst von dem Maschinengestell der Werkzeugmaschine angeordnet sind. Auch der bearbeitungsstationsferne Werkzeugspeicher kann gegebenenfalls in Abhängigkeit von dem Werkzeugbedarf an der Werkzeugmaschine gerüstet werden.

Gemäß Patentanspruch 8 ist im Falle einer weiteren Variante der Erfindung vorgesehen, dass die Werkzeugaufnahme der Bearbeitungsstation relativ zu der Bewegungseinheit zustellbar ist. Aufgrund ihrer Beweglichkeit ist die Werkzeugaufnahme beispielsweise in der Lage, relativ zu dem an der Bewegungseinheit fixierten Werkstück Bearbeitungsbewegungen ausführen. Außerdem kann die relativ zu der Bewegungseinheit zustellbare Werkzeugaufnahme zur Vorbereitung eines Werkzeugwechsels dem mittels der Bewegungseinheit bewegten Werkzeugspeicher entgegenfahren.

Nachstehend wird die Erfindung anhand beispielhafter schematischer Darstellungen näher erläutert. Es zeigen:
- Figur 1: eine Werkzeugmaschine für die stanzende Blechbearbeitung mit einer Koordinatenführung und einer als Bewegungseinheit vorgesehenen Tragschiene der Koordinatenführung,
- Figur 2: die Werkzeugmaschine gemäß Figur 1 mit der Tragschiene der Koordinatenführung in einer Bearbeitungs- und Rüstposition und
- Figur 3: die Werkzeugmaschine gemäß den Figuren 1 und 2 beim Werkzeugwechsel an einer Werkzeugaufnahme der Werkzeugmaschine.

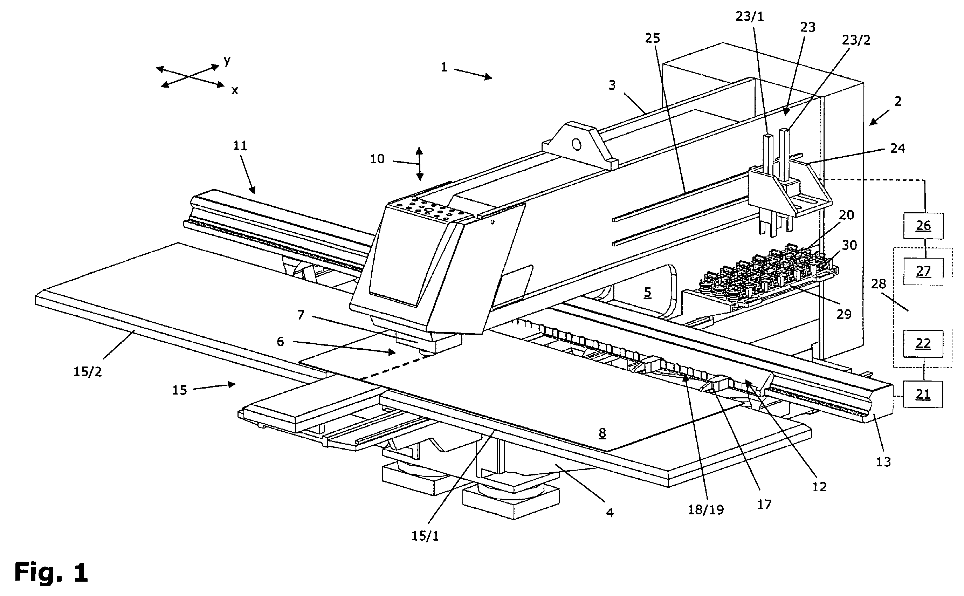

Gemäß den Figuren 1 bis 3 besitzt eine als Stanzmaschine 1 ausgeführte Werkzeugmaschine ein C-förmiges Maschinengestell 2 mit einem oberen Gestellschenkel 3, einem unteren Gestellschenkel 4 sowie einem zwischen dem oberen Gestellschenkel 3 und dem unteren Gestellschenkel 4 vorgesehenen Schenkelzwischenraum 5.

An den freien Enden des oberen Gestellschenkels 3 und des unteren Gestellschenkels 4 befindet sich eine Bearbeitungsstation in Form einer Stanzstation 6. In herkömmlicher Weise ist in eine Werkzeugaufnahme 7 der Stanzstation 6 als Bearbeitungswerkzeug ein in Figur 1 nicht im Einzelnen erkennbares Stanzwerkzeug eingewechselt. Die Werkzeugaufnahme 7 umfasst eine an dem oberen Gestellschenkel 3 des Maschinengestells 2 vorgesehene obere Werkzeugaufnahme und eine untere Werkzeugaufnahme an dem unteren Gestellschenkel 4 des Maschinengestells 2.

Zur stanzenden Bearbeitung eines Blechs 8 wirkt ein in die obere Werkzeugaufnahme eingewechselter Stanzstempel in üblicher Weise mit einer Stanzmatrize zusammen, die in die in Figur 1 durch das Blech 8 verdeckte untere Werkzeugaufnahme eingewechselt ist. Mittels eines numerisch gesteuerten Hubantriebs ist der Stanzstempel in Richtung eines Doppelpfeils 10 heb- und senkbar und dadurch relativ zu der Stanzmatrize beweglich. Zusätzlich zu dem Stanzstempel und der Stanzmatrize umfasst das in die Werkzeugaufnahme 7 der Stanzstation 6 eingewechselte Stanzwerkzeug in gewohnter Weise einen Abstreifer.

Der Schenkelzwischenraum 5 zwischen dem oberen Gestellschenkel 3 und dem unteren Gestellschenkel 4 nimmt eine als Koordinatenführung 11 üblicher Bauart ausgeführte Führungsvorrichtung auf.

Die Koordinatenführung 11 umfasst als Bewegungseinheit einen Führungsträger in Form einer Tragschiene 12, die an einem Grundträger 13 der Koordinatenführung 11 längsbeweglich geführt ist. An dem Grundträger 13 ist ein zweiteiliger Werkstücktisch 15 mit Tischhälften 15/1, 15/2 angebracht. Die beiden Tischhälften 15/1, 15/2 sind durch einen Zwischenraum voneinander getrennt, innerhalb dessen die untere Werkzeugaufnahme angeordnet ist.

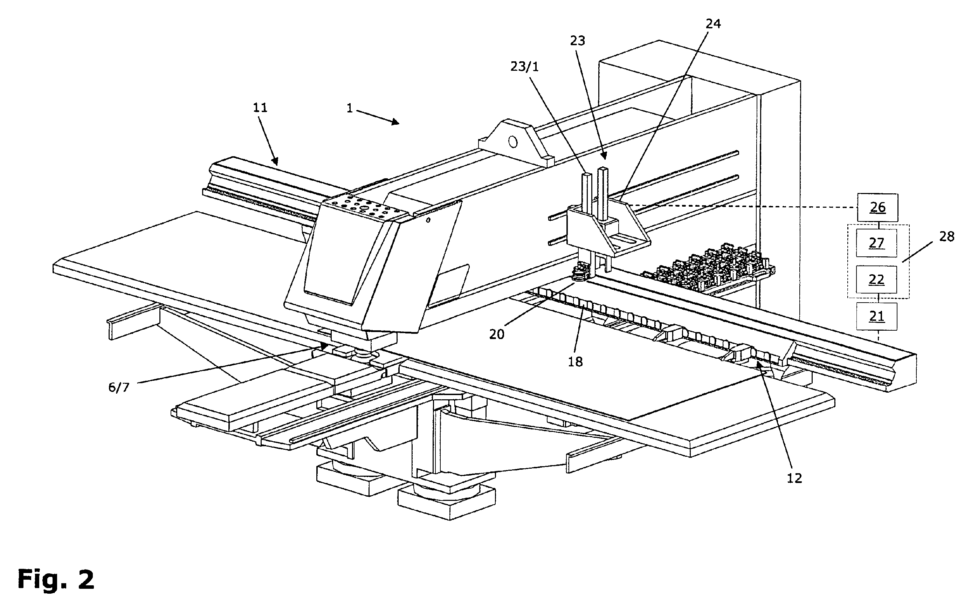

An der Tragschiene 12 sind Spannpratzen 17 und außerdem Speicherplätze 18 eines Werkzeugspeichers 19 vorgesehen. Die Spannpratzen 17 dienen zur lösbaren Fixierung eines Blechs 8 an der Tragschiene 12. Die Speicherplätze 18 des Werkzeugspeichers 19 nehmen als Bearbeitungswerkzeuge Stanzwerkzeuge 20 auf, wie sie anstelle des in die Werkzeugaufnahme 7 der Stanzstation 6 eingewechselten Stanzwerkzeugs verwendet werden können. Ein Stanzwerkzeug 20 auf dem Weg zu einem der Speicherplätze 18 ist in Figur 2 dargestellt. Längs der Tragschiene 12 ist eine Mehrzahl von Speicherplätzen 18 für Stanzwerkzeuge 20 vorgesehen. Der Werkzeugspeicher 19 ist somit als sogenanntes Linearmagazin ausgebildet. Der Übersichtlichkeit halber sind in Figur 1 lediglich leere Speicherplätze 18 gezeigt. Tatsächlich sind die Speicherplätze 18 an der Tragschiene 12 nahezu vollständig mit Stanzwerkzeugen 20 belegt.

Der Grundträger 13 der Koordinatenführung 11 erstreckt sich mit seiner Längsrichtung in einer ersten Achsrichtung (x-Achse) und ist in einer zweiten Achsrichtung (y-Achse) an dem unteren Gestellschenkel 4 beweglich geführt. Die x-Achse und die y-Achse spannen eine horizontale Bewegungsebene auf.

Ein in Figur 1 angedeuteter motorischer Antrieb 21 dient zur Erzeugung von Bewegungen des Grundträgers 13 der Koordinatenführung 11 längs des unteren Gestellschenkels 4 des Maschinengestells 2 (y-Richtung) und von Bewegungen der Tragschiene 12 längs des Grundträgers 13 (x-Richtung). Der motorische Antrieb 21 wird durch eine numerische Steuerungsvorrichtung 22 gesteuert.

Gemeinsam mit dem Grundträger 13 bewegen sich der Werkstücktisch 15, der Werkzeugspeicher 19 mit den Speicherplätzen 18, die Spannpratzen 17 und gegebenenfalls ein mittels der Spannpratzen 17 gehaltenes Blech 8 in y-Richtung. Mit der Tragschiene 12 sind der Werkzeugspeicher 19 mit den Speicherplätzen 18, die Spannpratzen 17 und gegebenenfalls das Blech 8 relativ zu dem Grundträger 13 längs der x-Achse verfahrbar.

Oberhalb der Koordinatenführung 11 ist an dem oberen Gestellschenkel 3 des Maschinengestells 2 ein Doppelgreifer 23 mit Werkzeughandlingvorrichtungen in Form zweier Greifereinheiten 23/1, 23/2 montiert. Die Greifereinheiten 23/1, 23/2 sind an einer Tragstruktur 24 gelagert.

Gemeinsam mit der Tragstruktur 24 sind die Greifereinheiten 23/1, 23/2 an einer Längsführung 25 für die Tragstruktur 24 in y-Richtung und somit in Längsrichtung des oberen Gestellschenkels 3 verfahrbar. Zusätzlich ist jede der Greifereinheiten 23/1, 23/2 relativ zu der Tragstruktur 24 in x-Richtung und somit in Querrichtung des oberen Gestellschenkels 3 zustellbar.

Zur Erzeugung der Bewegungen der Greifereinheiten 23/1, 23/2 des Doppelgreifers 23 längs der x-Achse und längs der y-Achse dient ein motorischer Antrieb 26 mit einer numerischen Steuerungsvorrichtung 27. Die numerische Steuerungsvorrichtung 27 des motorischen Antriebs 26 der Greifereinheiten 23/1, 23/2 ist ebenso wie die numerische Steuerungsvorrichtung 22 des motorischen Antriebs 21 der Tragschiene 12 in eine numerische Maschinensteuerung 28 der Stanzmaschine 1 integriert.

Mittels der numerischen Maschinensteuerung 28 wird ein numerisches Bearbeitungsprogramm zum Betreiben der Stanzmaschine 1 abgearbeitet. Das numerische Bearbeitungsprogramm wird mittels eines Programmiersystems erzeugt. Wesentlicher Bestandteil des Programmiersystems ist ein Computerprogrammprodukt zur Erzeugung der einzelnen Steuerbefehle des numerischen Bearbeitungsprogramms.

Die Greifereinheiten 23/1, 23/2 des Doppelgreifers 23 können sowohl auf die Speicherplätze 18 des Werkzeugspeichers 19 an der Tragschiene 12 der Koordinatenführung 11 als auch auf ein Werkzeugtablett 29 zugreifen, das an dem hinteren Ende des Maschinengestells 2 angebracht ist und das eine Mehrzahl von Speicherplätzen 30 für Stanzwerkzeuge 20 aufweist. Das Werkzeugtablett 29 bildet einen bearbeitungsstationsfernen Werkzeugspeicher, der Werkzeugspeicher 19 an der Tragschiene 12 ist verglichen mit dem Werkzeugtablett 29 bearbeitungsstationsnah angeordnet.

Figur 1 zeigt die Werkzeugmaschine 1 während der Bearbeitung des Blechs 8 mittels des in die Werkzeugaufnahme 7 der Stanzstation 6 eingewechselten Stanzwerkzeugs. Das zu bearbeitende Blech 8 ist mittels der Spannpratzen 17 an der Tragschiene 12 fixiert und wird zur Erstellung der gewünschten Ausstanzung durch entsprechende Bewegungen der Tragschiene 12 gegenüber dem Stanzwerkzeug der Stanzstation 6 zugestellt. In y-Richtung wird die Tragschiene 12 dabei mit Hilfe des Grundträgers 13 bewegt. Bewegungen in x-Richtung führt die Tragschiene 12 gegebenenfalls längs des Grundträgers 13 aus. Die Schnittlinie der in dem vorliegenden Beispielsfall an dem Blech 8 zu erstellenden Ausstanzung ist in Figur 1 gestrichelt angedeutet. Dementsprechend erstreckt sich die zu erstellende Ausstanzung in y-Richtung vom Inneren des Blechs 8 bis zu dem in Figur 1 vorderen Blechrand.

Bereits während der Blechbearbeitung verfährt die Greifereinheit 23/1 des Doppelgreifers 23 längs des oberen Gestellschenkels 3 - und soweit erforderlich - auch in Querrichtung des oberen Gestellschenkels 3 in eine Position, in welcher die Greifereinheit 23/1 oberhalb desjenigen Stanzwerkzeugs 20 auf dem Werkzeugtablett 29 angeordnet ist, das nach Beendigung des laufenden Blechbearbeitungsvorgangs an einen bestimmten Speicherplatz 18 des Werkzeugspeichers 19 an der Tragschiene 12 übergeben werden soll. Ebenfalls noch während der laufenden Blechbearbeitung wird die Greifereinheit 23/1 zu dem betreffenden Stanzwerkzeug 20 auf dem Werkzeugtablett 29 abgesenkt. Nachdem die Greifereinheit 23/1 das Stanzwerkzeug 20 aufgenommen hat, verfährt die Greifereinheit 23/1 mittels des gesteuerten motorischen Antriebs 26 in Richtung auf die Stanzstation 6 in eine Übergabe-/Übernahmeposition. Anstelle der Greifereinheit 23/1 könnte auch die Greifereineit 23/2 des Doppelgreifers 23 eingesetzt werden.

Die Übergabe-/Übernahmeposition der Greifereinheit 23/1 wird von der numerischen Steuerungsvorrichtung 27 des motorischen Antriebs 26 der Greifereinheit 23/1 in Abhängigkeit von einer Rüstposition der Tragschiene 12 definiert. Die Rüstposition der Tragschiene 12 wiederum wird von der numerischen Steuerungsvorrichtung 22 des motorischen Antriebs 21 der Tragschiene 12 in Abhängigkeit von einer Bearbeitungsposition der Tragschiene 12 vorgegeben. Bei dieser Bearbeitungsposition der Tragschiene 12 handelt es sich um die Position, welche die Tragschiene 12 zu demjenigen Zeitpunkt einnimmt, zu welchem das an der Stanzstation 6 eingewechselte Stanzwerkzeug den abschließenden Stanzhub des laufenden Bearbeitungsvorgangs ausführt. Als Rüstposition der Tragschiene 12 wird die von der Tragschiene 12 ausgehend von der Bearbeitungsposition auf kürzestem Wege anfahrbare Position definiert, bei welcher der Speicherplatz 18 an der Tragschiene 12, für welchen das an der Greifereinheit 23/1 gehaltene Stanzwerkzeug 20 bestimmt ist, für die Greifereinheit 23/1 zugänglich ist.

In dem vorliegenden Beispielsfall sind die Verhältnisse derart, dass die Bearbeitungsposition der Tragschiene 12 zum Zeitpunkt des abschließenden Stanzhubs des laufenden Bearbeitungsvorgangs unmittelbar die Rüstposition der Tragschiene 12 darstellt. Der zu bestückende Speicherplatz 18 der Tragschiene 12 nimmt dementsprechend bereits zum Zeitpunkt des abschließenden Stanzhubs des laufenden Bearbeitungsvorgangs eine Position ein, in welcher er für die zuvor in eine entsprechende Übergabe-/Übernahmeposition verfahrene Greifereinheit 23/1 zugänglich ist. Die Tragschiene 12 in der Rüstposition und die Greifereinheit 23/1 in der Übergabe-/Übernahmeposition sind in Figur 2 gezeigt.

Befindet sich die Tragschiene 12 in der Rüstposition und ist die Greifereinheit 23/1 in die Übergabe-/Übernahmeposition bewegt, so liegt die Greifereinheit 23/1 mit dem daran gehaltenen Stanzwerkzeug 20 dem zu bestückenden Speicherplatz 18 der Tragschiene 12 in vertikaler Richtung gegenüber. Nun bedarf es lediglich noch einer Absenkbewegung der Greifereinheit 23/1, um das Stanzwerkzeug 20 an den dafür vorgesehenen Speicherplatz 18 des Werkzeugspeichers 19 an der Tragschiene 12 zu übergeben.

Die Übergabe des Stanzwerkzeugs 20 von der Greifereinheit 23/1 an den betreffenden Speicherplatz 18 der Tragschiene 12 kann zeitgleich mit dem abschließenden Stanzhub des laufenden Bearbeitungsvorgangs und damit hauptzeitparallel oder unmittelbar im Anschluss an den abschließenden Stanzhub des laufenden Bearbeitungsvorgangs erfolgen. Eine durch das Rüsten des betreffenden Speicherplatzes 18 bedingte Unterbrechung des Prozessablaufs wird dadurch vollständig vermieden, zumindest wird der Zeitraum, der für das Rüsten des betreffenden Speicherplatzes 18 an der Tragschiene 12 benötigt wird und der als Nebenzeit nicht für die Blechbearbeitung genutzt werden kann, minimiert.

Alternativ oder zusätzlich zu der Abstimmung der Übergabe-/Übernahmeposition der Greifereinheit 23/1 oder der Greifereinheit 23/2 auf eine Bearbeitungsposition der Tragschiene 12 vor dem Anfahren einer Rüstposition kann die Übergabe-/Übernahmeposition der Greifereinheit 23/1 in Abhängigkeit von einer Werkzeugwechselposition definiert werden, welche die Tragschiene 12 vor dem Anfahren einer Rüstposition einnimmt.

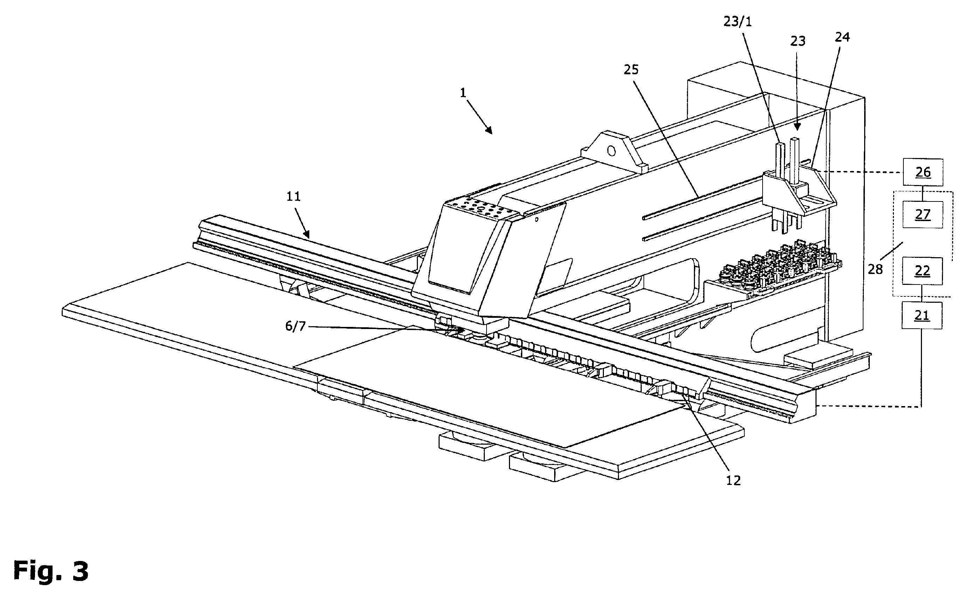

Die Verhältnisse bei einem Werkzeugwechsel an der Stanzstation 6 sind in Figur 3 dargestellt.

Durch entsprechende Bewegungen der Tragschiene 12 gegenüber der Werkzeugaufnahme 7 der Stanzstation 6 wird zunächst das an der Stanzstation 6 eingewechselte Stanzwerkzeug 20 auf einen Speicherplatz 18 des Werkzeugspeichers 19 an der Tragschiene 12 übernommen. Anschließend wird die Tragschiene 12 relativ zu der Werkzeugaufnahme 7 derart verfahren, dass das Stanzwerkzeug 20, welches anstelle des ursprünglichen Stanzwerkzeugs 20 an der Stanzstation 6 eingesetzt werden soll, an die Werkzeugaufnahme 7 übergeben werden kann. Zu dem Zeitpunkt, zu welchem das anstelle des ursprünglichen Stanzwerkzeugs 20 vorgesehene Stanzwerkzeug 20 in die Werkzeugaufnahme 7 der Stanzstation 6 eingewechselt ist, nimmt die Tragschiene 12 die Werkzeugwechselposition ein, auf welche die Rüstposition der Tragschiene 12 und die Übergabe-/Übernahmeposition der Greifereinheit 23/1 oder der Greifereinheit 23/2 des Doppelgreifers 23 abgestimmt werden.

Unter Berücksichtigung der Werkzeugwechselposition der Tragschiene 12 definiert die numerische Steuerungsvorrichtung 22 des motorischen Antriebs 21 der Tragschiene 12 als Rüstposition der Tragschiene 12 diejenige Position der Tragschiene 12, bei welcher ein zu bestückender Speicherplatz 18 der Tragschiene 12 für die Greifereinheit 23/1 oder die Greifereinheit 23/2 zugänglich ist und die von der Tragschiene 12 ausgehend von der Werkzeugwechselposition auf kürzestem Wege angefahren werden kann. Passend zu der auf diese Art und Weise definierten Rüstposition der Tragschiene 12 legt die numerische Steuerungsvorrichtung 27 des motorischen Antriebs 26 des Doppelgreifers 23 die Übergabe-/Übernahmeposition der betreffenden Greifereinheit 23/1, 23/2 fest.

In die zuvor definierte Übergabe-/Übernahmeposition wird die betreffende Greifereinheit 23/1, 23/2 mit dem an die Tragschiene 12 zu übergebenden Stanzwerkzeug 20 bereits während des Werkzeugwechsels an der Stanzstation 6 bewegt. Fährt die Tragschiene 12 nach Beendigung des Werkzeugwechsels die Rüstposition an, so wird sie bereits von der in die Übergabe-/ Übernahmeposition bewegten Greifereinheit 23/1, 23/2 erwartet und die Werkzeugübergabe an den zu bestückenden Speicherplatz 18 der Tragschiene 12 kann erfolgen, unmittelbar nachdem die Tragschiene 12 die Rüstposition erreicht hat.

Abweichend von den vorstehend beschriebenen Abläufen ist es denkbar, dass die Rüstposition der Tragschiene 12 und die Übergabe-/Übernahmeposition der Greifereinheiten 23/1, 23/2 des Doppelgreifers 23 in Abhängigkeit von einer Bearbeitungsposition der Tragschiene 12 definiert werden, in welche die Tragschiene 12 ausgehend von der Rüstposition bewegt wird. In diesem Fall handelt es sich bei der von der numerischen Steuerungsvorrichtung 22 des motorischen Antriebs 21 zu berücksichtigenden Bearbeitungsposition der Tragschiene 12 um diejenige Position, welche die Tragschiene 12 zum Zeitpunkt des ersten Stanzhubs der dann folgenden Blechbearbeitung einnimmt.

Gleichfalls möglich ist die Definition der Rüstposition der Tragschiene 12 und der Übergabe-/Übernahmeposition der Greifereinheiten 23/1, 23/2 des Doppelgreifers 23 in Abhängigkeit von einer Werkzeugwechselposition, welche die Tragschiene 12 ausgehend von der Rüstposition anfährt. Die Werkzeugwechselposition der Tragschiene 12 ist in diesem Fall diejenige Position der Tragschiene 12, von der ausgehend der Werkzeugwechsel durch entsprechende Verfahrbewegung der Tragschiene 12 durchgeführt wird.

Unabhängig davon, ob die Werkzeugwechselposition der Tragschiene 12 vor oder nach einer Rüstposition der Tragschiene 12 angefahren wird, besteht die Möglichkeit, den Verfahrweg der Tragschiene 12 zwischen der Rüstposition und der Werkzeugwechselposition zu verkürzen, wenn die Werkzeugaufnahme 7 relativ zu dem Maschinengestell 2 der Stanzmaschine 1 in y-Richtung verfahren kann. Dies ist beispielsweise an Maschinen der Fall, an denen die Werkzeugaufnahme 7 zu Bearbeitungszwecken hochdynamische kurze Bewegungen relativ zu dem zu bearbeitenden Werkstück ausführen kann, das ansonsten mittels einer Koordinatenführung gegenüber dem an der Werkzeugaufnahme 7 eingewechselten Bearbeitungswerkzeug zugestellt wird. Eine derartige Beweglichkeit der Werkzeugaufnahme 7 kann dazu genutzt werden, um den Ort des Werkzeugwechsels an den Doppelgreifer 23 und die von dessen Greifereinheiten 23/1, 23/2 anfahrbaren Übergabe-/Übernahmepositionen anzunähern.

## Patentansprüche

1. Werkzeugmaschine zum Bearbeiten eines Werkstücks, insbesondere eines Blechs (8),
• mit einer Bearbeitungsstation (6), die eine Werkzeugaufnahme (7) aufweist, an welcher ein Bearbeitungswerkzeug (20) zur Bearbeitung des Werkstücks ein- und auswechselbar ist,
• mit einem Werkzeugspeicher (19), der wenigstens einen Speicherplatz (18) für ein Bearbeitungswerkzeug (20) aufweist,
• mit einer Werkzeughandlingvorrichtung (23/1, 23/2), die mittels eines gesteuerten Antriebs (26) in eine Übergabe-/Übernahmeposition bewegbar ist,
• mit einer Bewegungseinheit (12), mittels derer das Werkstück und der Werkzeugspeicher (19) bewegbar sind und die mittels eines gesteuerten Antriebs (21) einerseits in eine Rüstposition und andererseits in eine Betriebsposition in Form einer Bearbeitungsposition und/oder in eine Betriebsposition in Form einer Werkzeugwechselposition bewegbar ist,
• mit einer für den Antrieb (26) der Werkzeughandlingvorrichtung (23/1, 23/2) vorgesehenen Steuerungsvorrichtung (27), mittels derer die Übergabe-/ Übernahmeposition der Werkzeughandlingvorrichtung (23/1, 23/2) definierbar ist sowie
• mit einer für den Antrieb (21) der Bewegungseinheit (12) vorgesehenen Steuerungsvorrichtung (22), mittels derer einerseits die Rüstposition und andererseits die Bearbeitungsposition und/oder die Werkzeugwechselposition der Bewegungseinheit (12) definierbar sind,
wobei
• bei Rüstposition der Bewegungseinheit (12) der Speicherplatz (18) des Werkzeugspeichers (19) mittels der Bewegungseinheit (12) in eine Position bewegt ist, in welcher bei gleichzeitiger Übergabe-/Übernahmeposition der Werkzeughandlingvorrichtung (23/1, 23/2) mittels der Werkzeughandlingvorrichtung (23/1, 23/2) ein Bearbeitungswerkzeug (20) dem Speicherplatz (18) des Werkzeugspeichers (19) zuführbar und/oder von dem Speicherplatz (18) des Werkzeugspeichers (19) abführbar ist,
• bei Bearbeitungsposition der Bewegungseinheit (12) das mit der Bewegungseinheit (12) bewegungsverbundene Werkstück mittels der Bewegungseinheit (12) in eine Position bewegt ist, in welcher das Werkstück an einer hierfür vorgesehenen Stelle mittels des in die Werkzeugaufnahme (7) der Bearbeitungsstation (6) eingewechselten Bearbeitungswerkzeugs (20) bearbeitbar ist und
• bei Werkzeugwechselposition der Bewegungseinheit (12) der mit der Bewegungseinheit (12) bewegungsverbundene Werkzeugspeicher (19) mittels der Bewegungseinheit (12) in eine Position bewegt ist, in welcher an der Bearbeitungsstation (6) ein einzuwechselndes Bearbeitungswerkzeug (20) von dem Speicherplatz (18) des Werkzeugspeichers (19) an die Werkzeugaufnahme (7) der Bearbeitungsstation (6) übergebbar ist oder ein auszuwechselndes Bearbeitungswerkzeug (20) von der Werkzeugaufnahme (7) der Bearbeitungsstation (6) an den Speicherplatz (18) des Werkzeugspeichers (19) übergebbar ist,
**dadurch gekennzeichnet, dass**
die Steuerungsvorrichtung (22) des Antriebs (21) der Bewegungseinheit (12) die Rüstposition der Bewegungseinheit (12) und die Steuerungsvorrichtung (27) des Antriebs (26) der Werkzeughandlingvorrichtung (23/1, 23/2) die Übergabe-/Übernahmeposition der Werkzeughandlingvorrichtung (23/1, 23/2) variabel definieren, indem die Steuerungsvorrichtung (22) des Antriebs (21) der Bewegungseinheit (12) die Rüstposition der Bewegungseinheit (12) in Abhängigkeit von der Betriebsposition der Bewegungseinheit (12) vor der Rüstposition und/oder in Abhängigkeit von der Betriebsposition der Bewegungseinheit (12) nach der Rüstposition definiert und indem die Steuerungsvorrichtung (27) des Antriebs (26) der Werkzeughandlingvorrichtung (23/1, 23/2) die Übergabe-/Übernahmeposition der Werkzeughandlingvorrichtung (23/1, 23/2) in Abhängigkeit von der mittels der Steuerungsvorrichtung (22) des Antriebs (21) der Bewegungseinheit (12) definierten Rüstposition definiert.

2. Werkzeugmaschine nach Anspruch 1, **dadurch gekennzeichnet, dass** die Steuerungsvorrichtung (22) des Antriebs (21) der Bewegungseinheit (12) die Rüstposition der Bewegungseinheit (12) derart definiert, dass der Zeitbedarf für die Bewegung der Bewegungseinheit (12) zwischen der Rüstposition der Bewegungseinheit (12) einerseits und der Betriebsposition der Bewegungseinheit (12) vor der Rüstposition und/oder der Betriebsposition der Bewegungseinheit (12) nach der Rüstposition andererseits möglichst gering ist.

3. Werkzeugmaschine nach einem der vorhergehenden Ansprüche, **dadurch gekennzeichnet, dass** die Steuerungsvorrichtung (22) des Antriebs (21) der Bewegungseinheit (12) die Rüstposition der Bewegungseinheit (12) derart definiert, dass der Betrag der Bewegung der Bewegungseinheit (12) zwischen der Rüstposition der Bewegungseinheit (12) einerseits und der Betriebsposition der Bewegungseinheit (12) vor der Rüstposition und/oder der Betriebsposition der Bewegungseinheit (12) nach der Rüstposition andererseits möglichst klein ist.

4. Werkzeugmaschine nach einem der vorhergehenden Ansprüche, **dadurch gekennzeichnet, dass** die Werkzeughandlingvorrichtung (23/1, 23/2) mittels des gesteuerten Antriebs (26) der Werkzeughandlingvorrichtung (23/1, 23/2) spätestens dann in die in Abhängigkeit von der Rüstposition der Bewegungseinheit (12) definierte Übergabe-/ Übernahmeposition bewegt ist, wenn die Bewegungseinheit (12) mittels des gesteuerten Antriebs (21) der Bewegungseinheit (12) in die Rüstposition bewegt ist.

5. Werkzeugmaschine nach einem der vorhergehenden Ansprüche, **dadurch gekennzeichnet,**
• **dass** die Bewegungseinheit (12) als Führungsträger einer Führungsvorrichtung (11) ausgebildet ist, die in einem Schenkelzwischenraum (5) zwischen einem oberen Gestellschenkel (3) und einem damit gleichgerichtet verlaufenden unteren Gestellschenkel (4) eines Maschinengestells (2) der Werkzeugmaschine angeordnet ist, wobei an dem oberen Gestellschenkel (3) und/oder an dem unteren Gestellschenkel (4) die Werkzeugaufnahme (7) der Bearbeitungsstation (6) vorgesehen ist und wobei der Führungsträger in Querrichtung des oberen Gestellschenkels (3) und des unteren Gestellschenkels (4) verläuft und relativ zu dem oberen Gestellschenkel (3) und dem unteren Gestellschenkel (4) bewegbar ist und
• **dass** an dem Führungsträger das Werkstück fixierbar und der Werkzeugspeicher (19) mit dem wenigstens einen Speicherplatz (18) für ein Bearbeitungswerkzeug (20) vorgesehen ist.

6. Werkzeugmaschine nach Anspruch 5, **dadurch gekennzeichnet, dass** die Werkzeughandlingvorrichtung (23/1, 23/2) mittels des gesteuerten Antriebs (26) der Werkzeughandlingvorrichtung (23/1, 23/2) in Längsrichtung des oberen Gestellschenkels (3) und des unteren Gestellschenkels (4) in die Übergabe-/Übernahmeposition zustellbar ist.

7. Werkzeugmaschine nach einem der vorhergehenden Ansprüche, **dadurch gekennzeichnet, dass** der Werkzeugspeicher (19) einen bearbeitungsstationsnahen Werkzeugspeicher (19) bildet und dass außerdem ein bearbeitungsstationsferner Werkzeugspeicher (29) vorgesehen ist und dass mittels der Werkzeughandlingvorrichtung (23/1, 23/2) dem bearbeitungsstationsnahen Werkzeugspeicher (19) zuzuführende Bearbeitungswerkzeuge (20) an dem bearbeitungsstationsfernen Werkzeugspeicher (29) aufnehmbar und/oder dass mittels der Werkzeughandlingvorrichtung (23/1, 23/2) von dem bearbeitungsstationsnahen Werkzeugspeicher (19) abgeführte Bearbeitungswerkzeuge (20) an den bearbeitungsstationsfernen Werkzeugspeicher (29) übergebbar sind.

8. Werkzeugmaschine nach einem der vorhergehenden Ansprüche, **dadurch gekennzeichnet, dass** die Werkzeugaufnahme (7) der Bearbeitungsstation (6) relativ zu der Bewegungseinheit (12) zustellbar ist.

9. Verfahren zum Betreiben einer Werkzeugmaschine zum Bearbeiten eines Werkstücks, insbesondere eines Blechs (8), wobei die Werkzeugmaschine
• eine Bearbeitungsstation (6) mit einer Werkzeugaufnahme (7), an welcher ein Bearbeitungswerkzeug (20) zur Bearbeitung des Werkstücks ein- und auswechselbar ist,
• einen Werkzeugspeicher (19) mit wenigstens einem Speicherplatz (18) für ein Bearbeitungswerkzeug (20),
• eine Werkzeughandlingvorrichtung (23/1, 23/2) mit einem mittels einer Steuerungsvorrichtung (27) gesteuerten Antrieb (26) sowie
• eine mit dem Werkstück und mit dem Werkzeugspeicher (19) bewegungsverbundene Bewegungseinheit (12) mit einem mittels einer Steuerungsvorrichtung (22) gesteuerten Antrieb (21)
aufweist und wobei im Rahmen des Verfahrens
• einerseits zum Rüsten des Werkzeugspeichers (19) die Bewegungseinheit (12) in eine von der Steuerungsvorrichtung (22) des Antriebs (21) der Bewegungseinheit (12) definierte Rüstposition und die Werkzeughandlingvorrichtung (23/1, 23/2) in eine von der Steuerungsvorrichtung (27) des Antriebs (26) der Werkzeughandlingvorrichtung (23/1, 23/2) definierte Übergabe-/Übernahmeposition bewegt werden, wobei bei Rüstposition der Bewegungseinheit (12) und bei gleichzeitiger Übergabe-/Übernahmeposition der Werkzeughandlingvorrichtung (23/1, 23/2) mittels der Werkzeughandlingvorrichtung (23/1, 23/2) ein Bearbeitungswerkzeug (20) dem Speicherplatz (18) des Werkzeugspeichers (19) zuführbar und/oder von dem Speicherplatz (18) des Werkzeugspeichers (19) abführbar ist und andererseits
• die Bewegungseinheit (12) in eine von der Steuerungsvorrichtung (22) des Antriebs (21) der Bewegungseinheit (12) definierte Betriebsposition in Form einer Bearbeitungsposition und dadurch das mit der Bewegungseinheit (12) bewegungsverbundene Werkstück in eine Position bewegt wird, in welcher das Werkstück an einer hierfür vorgesehenen Stelle mittels des in die Werkzeugaufnahme (7) der Bearbeitungsstation (6) eingewechselten Bearbeitungswerkzeugs (20) bearbeitbar ist und/oder
• die Bewegungseinheit (12) in eine von der Steuerungsvorrichtung (22) des Antriebs (21) der Bewegungseinheit (12) definierte Betriebsposition in Form einer Werkzeugwechselposition und dadurch der mit der Bewegungseinheit (12) bewegungsverbundene Werkzeugspeicher (19) in eine Position bewegt wird, in welcher an der Bearbeitungsstation (6) ein einzuwechselndes Bearbeitungswerkzeug (20) von dem Speicherplatz (18) des Werkzeugspeichers (19) an die Werkzeugaufnahme (7) der Bearbeitungsstation (6) übergebbar ist oder ein auszuwechselndes Bearbeitungswerkzeug (20) von der Werkzeugaufnahme (7) der Bearbeitungsstation (6) an den Speicherplatz (18) des Werkzeugspeichers (19) übergebbar ist,
**dadurch gekennzeichnet, dass**
die Rüstposition der Bewegungseinheit (12) durch die Steuerungsvorrichtung (22) des Antriebs (21) der Bewegungseinheit (12) und die Übergabe/Übernahme-position der Werkzeughandlingvorrichtung (23/1, 23/2) durch die Steuerungsvorrichtung (27) des Antriebs (26) der Werkzeughandlingvorrichtung (23/1, 23/2) variabel definiert werden, indem die Rüstposition der Bewegungseinheit (12) durch die Steuerungsvorrichtung (22) des Antriebs (21) der Bewegungseinheit (12) in Abhängigkeit von der Betriebsposition der Bewegungseinheit (12) vor der Rüstposition und/oder in Abhängigkeit von der Betriebsposition der Bewegungseinheit (12) nach der Rüstposition definiert wird und indem die Übergabe-/Übernahmeposition der Werkzeughandlingvorrichtung (23/1, 23/2) durch die Steuerungsvorrichtung (27) des Antriebs (26) der Werkzeughandlingvorrichtung (23/1, 23/2) in Abhängigkeit von der mittels der Steuerungsvorrichtung (22) des Antriebs (21) der Bewegungseinheit (12) definierten Rüstposition definiert wird.

10. Bearbeitungsprogramm zum Betreiben einer Werkzeugmaschine nach einem der Ansprüche 1 bis 8, wobei eine numerische Maschinensteuerung (28) mit einer numerischen Steuerungsvorrichtung (22) für den Antrieb (21) der Bewegungseinheit (12) und mit einer numerischen Steuerungsvorrichtung (27) für den Antrieb (26) der Werkzeughandlingvorrichtung (23/1, 23/2) vorgesehen ist, **dadurch gekennzeichnet, dass** das Bearbeitungsprogramm Steuerbefehle für den Antrieb (21) der Bewegungseinheit (12) und Steuerbefehle für den Antrieb (26) der Werkzeughandlingvorrichtung (23/1, 23/2) umfasst, welche bewirken, dass das Verfahren nach Anspruch 9 durchgeführt wird, wenn das Bearbeitungsprogramm auf der numerischen Maschinensteuerung (28) abläuft.

11. Verfahren zum Erstellen eines Bearbeitungsprogramms nach Anspruch 10, **dadurch gekennzeichnet, dass** Steuerbefehle für den Antrieb (21) der Bewegungseinheit (12) und für den Antrieb (26) der Werkzeughandlingvorrichtung (23/1, 23/2) erzeugt werden, welche bewirken, dass das Verfahren nach Anspruch 9 ausgeführt wird, wenn das Bearbeitungsprogramm auf der numerischen Maschinensteuerung (28) abläuft.

12. Computerprogrammprodukt, welches Kodierungsmittel aufweist, die zum Durchführen aller Schritte des Verfahrens nach Anspruch 11 zum Erstellen eines Bearbeitungsprogramms angepasst sind, wenn das Computerprogrammprodukt auf einer Datenverarbeitungsanlage betrieben wird.

## Claims

1. Machine tool for processing a workpiece, in particular a metal sheet (8),
• having a processing station (6) which has a tool receiving member (7) in which a processing tool (20) for processing the workpiece can be introduced and replaced,
• having a tool store (19) which has at least one storage space (18) for a processing tool (20),
• having a tool handling device (23/1, 23/2) which can be moved by means of a controlled drive (26) into a transfer/receiving position,
• having a movement unit (12) by means of which the workpiece and the tool store (19) can be moved and which can be moved by means of a controlled drive (21), on the one hand, into a set-up position and, on the other hand, into an operating position in the form of a processing position and/or into an operating position in the form of a tool changing position,
• having a control device (27) which is provided for the drive (26) of the tool handling device (23/1, 23/2) and by means of which the transfer/receiving position of the tool handling device (23/1, 23/2) can be defined, and
• having a control device (22) which is provided for the drive (21) of the movement unit (12) and by means of which, on the one hand, the set-up position and, on the other hand, the processing position and/or the tool changing position of the movement unit (12) can be defined,
wherein,
• with the movement unit (12) in the set-up position, the storage space (18) of the tool store (19) is moved by means of the movement unit (12) into a position in which, with the tool handling device (23/1, 23/2) in a simultaneous transfer/receiving position, a processing tool (20) can be supplied to the storage space (18) of the tool store (19) and/or can be removed from the storage space (18) of the tool store (19) by means of the tool handling device (23/1, 23/2),
• with the movement unit (12) in the processing position, the workpiece which is movingly connected to the movement unit (12) is moved by means of the movement unit (12) into a position in which the workpiece can be processed at a location provided for this purpose by means of the processing tool (20) which has been introduced into the tool receiving member (7) of the processing station (6), and
• with the movement unit (12) in the tool changing position, the tool store (19) which is movingly connected to the movement unit (12) is moved by means of the movement unit (12) into a position in which at the processing station (6) a processing tool (20) which is intended to be introduced can be transferred from the storage space (18) of the tool store (19) to the tool receiving member (7) of the processing station (6) or a processing tool (20) which is intended to be replaced can be transferred from the tool receiving member (7) of the processing station (6) to the storage space (18) of the tool store (19),
**characterised in that**
the control device (22) of the drive (21) of the movement unit (12) defines the set-up position of the movement unit (12) and the control device (27) of the drive (26) of the tool handling device (23/1, 23/2) defines the transfer/receiving position of the tool handling device (23/1, 23/2) in a variable manner by the control device (22) of the drive (21) of the movement unit (12) defining the set-up position of the movement unit (12) in accordance with the operating position of the movement unit (12) before the set-up position and/or in accordance with the operating position of the movement unit (12) after the set-up position and by the control device (27) of the drive (26) of the tool handling device (23/1, 23/2) defining the transfer/receiving position of the tool handling device (23/1, 23/2) in accordance with the set-up position defined by means of the control device (22) of the drive (21) of the movement unit (12).

2. Machine tool according to claim 1, **characterised in that** the control device (22) of the drive (21) of the movement unit (12) defines the set-up position of the movement unit (12) in such a manner that the time required for the movement of the movement unit (12) between the set-up position of the movement unit (12), on the one hand, and the operating position of the movement unit (12) before the set-up position and/or the operating position of the movement unit (12) after the set-up position, on the other hand, is as small as possible.

3. Machine tool according to either of the preceding claims, **characterised in that** the control device (22) of the drive (21) of the movement unit (12) defines the set-up position of the movement unit (12) in such a manner that the amount of the movement of the movement unit (12) between the set-up position of the movement unit (12), on the one hand, and the operating position of the movement unit (12) before the set-up position and/or the operating position of the movement unit (12) after the set-up position, on the other hand, is as small as possible.

4. Machine tool according to any one of the preceding claims, **characterised in that** the tool handling device (23/1, 23/2) is moved by means of the controlled drive (26) of the tool handling device (23/1, 23/2) into the transfer/receiving position defined in accordance with the set-up position of the movement unit (12) at the latest when the movement unit (12) is moved by means of the controlled drive (21) of the movement unit (12) into the set-up position.

5. Machine tool according to any one of the preceding claims, **characterised in that**
• the movement unit (12) is configured as a guide carrier of a guide device (11) which is arranged in a leg intermediate space (5) between an upper frame leg (3) and a lower frame leg (4) of a machine frame (2) of the machine tool, which lower frame leg (4) extends in the same direction as the upper frame leg (3), the tool receiving member (7) of the processing station (6) being provided on the upper frame leg (3) and/or on the lower frame leg (4) and the guide carrier extending in the transverse direction of the upper frame leg (3) and the lower frame leg (4) and being able to be moved relative to the upper frame leg (3) and the lower frame leg (4), and
• **in that** the workpiece can be fixed to the guide carrier and the tool store (19) with the at least one storage space (18) for a processing tool (20) is provided on the guide carrier.

6. Machine tool according to claim 5, **characterised in that** the tool handling device (23/1, 23/2) can be positioned by means of the controlled drive (26) of the tool handling device (23/1, 23/2) in the longitudinal direction of the upper frame leg (3) and the lower frame leg (4) into the transfer/receiving position.

7. Machine tool according to any one of the preceding claims, **characterised in that** the tool store (19) forms a tool store (19) which is close to the processing station and **in that** there is further provided a tool store (29) which is remote from the processing station and **in that** by means of the tool handling device (23/1, 23/2) processing tools (20) which are intended to be supplied to the tool store (19) close to the processing station can be received at the tool store (29) remote from the processing station and/or **in that** by means of the tool handling device (23/1, 23/2) processing tools (20) which have been removed from the tool store (19) close to the processing station can be transferred to the tool store (29) remote from the processing station.

8. Machine tool according to any one of the preceding claims, **characterised in that** the tool receiving member (7) of the processing station (6) can be positioned relative to the movement unit (12).

9. Method for operating a machine tool for processing a workpiece, in particular a metal sheet (8), wherein the machine tool has
• a processing station (6) having a tool receiving member (7) in which a processing tool (20) for processing the workpiece can be introduced and replaced,
• a tool store (19) having at least one storage space (18) for a processing tool (20),
• a tool handling device (23/1, 23/2) having a drive (26) which is controlled by means of a control device (27), and
• a movement unit (12) which is movingly connected to the workpiece and to the tool store (19) and which has a drive (21) which is controlled by means of a control device (22)
and wherein, in the context of the method,
• on the one hand, for setting up the tool store (19), the movement unit (12) is moved into a set-up position which is defined by the control device (22) of the drive (21) of the movement unit (12) and the tool handling device (23/1, 23/2) is moved into a transfer/receiving position defined by the control device (27) of the drive (26) of the tool handling device (23/1, 23/2), wherein, with the movement unit (12) in the set-up position and with the tool handling device (23/1, 23/2)in a simultaneous transfer/receiving position, a processing tool (20) can be supplied to the storage space (18) of the tool store (19) and/or can be removed from the storage space (18) of the tool store (19) by means of the tool handling device (231/, 23/2) and, on the other hand,
• the movement unit (12) is moved into an operating position defined by the control device (22) of the drive (21) of the movement unit (12), the operating position being in the form of a processing position, and the workpiece which is movingly connected to the movement unit (12) is thereby moved into a position in which the workpiece can be processed at a location which is provided for this purpose by means of the processing tool (20) which has been introduced into the tool receiving member (7) of the processing station (6), and/or
• the movement unit (12) is moved into an operating position defined by the control device (22) of the drive (21) of the movement unit (12), the operating position being in the form of a tool changing position, and the tool store (19) which is movingly connected to the movement unit (12) is thereby moved into a position in which at the processing station (6) a processing tool (20) which is intended to be introduced can be transferred from the storage space (18) of the tool store (19) to the tool receiving member (7) of the processing station (6) or a processing tool (20) which is intended to be replaced can be transferred from the tool receiving member (7) of the processing station (6) to the storage space (18) of the tool store (19),
**characterised in that**
the set-up position of the movement unit (12) is defined in a variable manner by the control device (22) of the drive (21) of the movement unit (12) and the transfer/receiving position of the tool handling device (23/1, 23/2) is defined in a variable manner by the control device (27) of the drive (26) of the tool handling device (23/1, 23/2) by the control device (22) of the drive (21) of the movement unit (12) defining the set-up position of the movement unit (12) in accordance with the operating position of the movement unit (12) before the set-up position and/or in accordance with the operating position of the movement unit (12) after the set-up position, and by the transfer/receiving position of the tool handling device (23/1, 23/2) being defined by the control device (27) of the drive (26) of the tool handling device (23/1, 23/2) in accordance with the set-up position defined by means of the control device (22) of the drive (21) of the movement unit (12).

10. Processing program for operating a machine tool according to any one of claims 1 to 8, wherein a numerical machine control unit (28) having a numerical control device (22) for the drive (21) of the movement unit (12) and having a numerical control device (27) for the drive (26) of the tool handling device (23/1, 23/2) is provided, **characterised in that** the processing program comprises control commands for the drive (21) of the movement unit (12) and control commands for the drive (26) of the tool handling device (23/1, 23/2), which control commands result in the method according to claim 9 being carried out when the processing program runs on the numerical machine control unit (28).

11. Method for producing a processing program according to claim 10, **characterised in that** control commands for the drive (21) of the movement unit (12) and for the drive (26) of the tool handling device (23/1, 23/2) are produced and result in the method according to claim 9 being carried out when the processing program runs on the numerical machine control unit (28).

12. Computer program product which has encoding means which are adapted for carrying out all the steps of the method according to claim 11 for producing a processing program when the computer program product is operated on a data processing system.

## Revendications

1. Machine-outil pour l'usinage d'une pièce, en particulier d'une tôle (8),
- avec un poste d'usinage (6) qui présente un porte-outil (7) sur lequel un outil d'usinage (20) destiné à usiner la pièce est monté de manière interchangeable,
- avec un magasin d'outils (19), qui présente au moins un emplacement de stockage (18) pour un outil d'usinage (20),
- avec un dispositif (23/1, 23/2) de manipulation d'outil, qui peut être déplacé au moyen d'un entraînement asservi (26) dans une position de transfert,
- avec une unité de déplacement (12), au moyen de laquelle la pièce et le magasin d'outils (19) peuvent être déplacés et qui, au moyen d'un entraînement asservi (21), peut être déplacée d'une part dans une position de préparation et d'autre part dans une position de service sous la forme d'une position d'usinage et/ou dans une position de service sous la forme d'une position de changement d'outil,
- avec un dispositif de commande (27) prévu pour l'entraînement (26) du dispositif (23/1, 23/2) de manipulation d'outil, au moyen duquel la position de transfert du dispositif (23/1, 23/2) de manipulation d'outil peut être définie,
- et avec un dispositif de commande (22) prévu pour l'entraînement (21) de l'unité de déplacement (12), au moyen duquel d'une part la position de préparation et d'autre part la position d'usinage et/ou la position de changement d'outil de l'unité de déplacement (12) peuvent être définies,
sachant
- que dans la position de préparation de l'unité de déplacement (12), l'emplacement de stockage (18) du magasin d'outils (19) est déplacé au moyen de l'unité de déplacement (12) dans une position dans laquelle, le dispositif (23/1, 23/2) de manipulation d'outil étant en même temps dans la position de transfert, un outil d'usinage (20) peut, au moyen du dispositif (23/1, 23/2) de manipulation d'outil, être apporté à l'emplacement de stockage (18) du magasin d'outils (19) et/ou être évacué de l'emplacement de stockage (18) du magasin d'outils (19),
- que dans la position d'usinage de l'unité de déplacement (12), la pièce liée en déplacement à l'unité de déplacement (12) est, au moyen de l'unité de déplacement (12), déplacée dans une position dans laquelle la pièce peut être usinée en un endroit prévu à cet effet au moyen de l'outil d'usinage (20) placé en remplacement dans le porte-outil (7) du poste d'usinage (6),
- et que dans la position de changement d'outil de l'unité de déplacement (12), le magasin d'outils (19) lié en déplacement à l'unité de déplacement (12) est, au moyen de l'unité de déplacement (12), déplacé dans une position dans laquelle, au poste d'usinage (6), un outil d'usinage (20) à placer en remplacement peut être transféré de l'emplacement de stockage (18) du magasin d'outils (19) au porte-outil (7) du poste d'usinage (6), ou un outil d'usinage (20) à remplacer peut être transféré du porte-outil (7) du poste d'usinage (6) à l'emplacement de stockage (18) du magasin d'outils (19),
**caractérisée en ce que**
le dispositif de commande (22) de l'entraînement (21) de l'unité de déplacement (12) définit de manière variable la position de préparation de l'unité de déplacement (12) et le dispositif de commande (27) de l'entraînement (26) du dispositif (23/1, 23/2) de manipulation d'outil définit de manière variable la position de transfert du dispositif (23/1, 23/2) de manipulation d'outil, par le fait que le dispositif de commande (22) de l'entraînement (21) de l'unité de déplacement (12) définit la position de préparation de l'unité de déplacement (12) en fonction de la position de service de l'unité de déplacement (12) avant la position de préparation et/ou en fonction de la position de service de l'unité de déplacement (12) après la position de préparation, et par le fait que le dispositif de commande (27) de l'entraînement (26) du dispositif (23/1, 23/2) de manipulation d'outil définit la position de transfert du dispositif (23/1, 23/2) de manipulation d'outil en fonction de la position de préparation définie au moyen du dispositif de commande (22) de l'entraînement (21) de l'unité de déplacement (12).

2. Machine-outil selon la revendication 1, **caractérisée en ce que** le dispositif de commande (22) de l'entraînement (21) de l'unité de déplacement (12) définit la position de préparation de l'unité de déplacement (12) de telle sorte que le temps nécessaire pour le déplacement de l'unité de déplacement (12) entre la position de préparation de l'unité de déplacement (12) d'une part et la position de service de l'unité de déplacement (12) avant la position de préparation et/ou la position de service de l'unité de déplacement (12) après la position de préparation d'autre part est le plus court possible.

3. Machine-outil selon l'une des revendications précédentes, **caractérisée en ce que** le dispositif de commande (22) de l'entraînement (21) de l'unité de déplacement (12) définit la position de préparation de l'unité de déplacement (12) de telle sorte que l'ampleur du déplacement de l'unité de déplacement (12) entre la position de préparation de l'unité de déplacement (12) d'une part et la position de service de l'unité de déplacement (12) avant la position de préparation et/ou la position de service de l'unité de déplacement (12) après la position de préparation d'autre part est la plus faible possible.

4. Machine-outil selon l'une des revendications précédentes, **caractérisée en ce que** le dispositif (23/1, 23/2) de manipulation d'outil est, au moyen de l'entraînement asservi (26) du dispositif (23/1, 23/2) de manipulation d'outil, déplacé dans la position de transfert définie en fonction de la position de préparation de l'unité de déplacement (12) au plus tard lorsque l'unité de déplacement (12) est déplacée dans la position de préparation au moyen de l'entraînement asservi (21) de l'unité de déplacement (12).

5. Machine-outil selon l'une des revendications précédentes, **caractérisée**
- **en ce que** l'unité de déplacement (12) est réalisée sous forme de support de guidage d'un dispositif de guidage (11) qui est disposé dans un espace (5) intermédiaire de branches entre une branche (3) supérieure de bâti et une branche (4) inférieure de bâti, s'étendant dans la même direction, d'un bâti de machine (2) de la machine-outil, sachant que le porte-outil (7) du poste d'usinage (6) est prévu sur la branche (3) supérieure de bâti et/ou sur la branche (4) inférieure de bâti et sachant que le support de guidage s'étend dans la direction transversale de la branche (3) supérieure de bâti et de la branche (4) inférieure de bâti et peut être déplacé par rapport à la branche (3) supérieure de bâti et à la branche (4) inférieure de bâti,
- et **en ce que** la pièce peut être immobilisée sur le support de guidage et le magasin d'outils (19) pourvu de l'emplacement de stockage (18) au moins unique pour un outil d'usinage (20) est prévu sur le support de guidage.

6. Machine-outil selon la revendication 5, **caractérisée en ce que** le dispositif (23/1, 23/2) de manipulation d'outil peut, au moyen de l'entraînement asservi (26) du dispositif (23/1, 23/2) de manipulation d'outil, être positionné dans la position de transfert dans la direction longitudinale de la branche (3) supérieure de bâti et de la branche (4) inférieure de bâti.

7. Machine-outil selon l'une des revendications précédentes, **caractérisée en ce que** le magasin d'outils (19) est un magasin d'outils (19) proche du poste d'usinage et **en ce qu'**il est en outre prévu un magasin d'outils (29) éloigné du poste d'usinage, et **en ce que**, au moyen du dispositif (23/1, 23/2) de manipulation d'outil, des outils d'usinage (20) à apporter au magasin d'outils (19) proche du poste d'usinage peuvent être pris dans le magasin d'outils (29) éloigné du poste d'usinage, et/ou **en ce que**, au moyen du dispositif (23/1, 23/2) de manipulation d'outil, des outils d'usinage (20) évacués du magasin d'outils (19) proche du poste d'usinage peuvent être transférés au magasin d'outils (29) éloigné du poste d'usinage.

8. Machine-outil selon l'une des revendications précédentes, **caractérisée en ce que** le porte-outil (7) du poste d'usinage (6) peut être positionné par rapport à l'unité de déplacement (12).

9. Procédé d'exploitation d'une machine-outil pour l'usinage d'une pièce, en particulier d'une tôle, sachant que la machine-outil présente
- un poste d'usinage (6) avec un porte-outil (7) sur lequel un outil d'usinage (20) destiné à usiner la pièce est monté de manière interchangeable,
- un magasin d'outils (19) avec au moins un emplacement de stockage (18) pour un outil d'usinage (20),
- un dispositif (23/1, 23/2) de manipulation d'outil, avec un entraînement (26) asservi au moyen d'un dispositif de commande (27),
- et une unité de déplacement (12) liée en déplacement à la pièce et au magasin d'outils (19), avec un entraînement (21) asservi au moyen d'un dispositif de commande (22),
et sachant que dans le cadre du procédé
- d'une part, afin de préparer le magasin d'outils (19), l'unité de déplacement (12) est déplacée dans une position de préparation définie par le dispositif de commande (22) de l'entraînement (21) de l'unité de déplacement (12) et le dispositif (23/1, 23/2) de manipulation d'outil est déplacé dans une position de transfert définie par le dispositif de commande (27) de l'entraînement (26) du dispositif (23/1, 23/2) de manipulation d'outil, sachant que dans la position de préparation de l'unité de déplacement (12), le dispositif (23/1, 23/2) de manipulation d'outil étant en même temps dans la position de transfert, un outil d'usinage (20) peut, au moyen du dispositif (23/1, 23/2) de manipulation d'outil, être apporté à l'emplacement de stockage (18) du magasin d'outils (19) et/ou être évacué de l'emplacement de stockage (18) du magasin d'outils (19), et d'autre part
- l'unité de déplacement (12) est déplacée dans une position de service sous la forme d'une position d'usinage définie par le dispositif de commande (22) de l'entraînement (21) de l'unité de déplacement (12), et par suite la pièce liée en déplacement à l'unité de déplacement (12), est déplacée dans une position dans laquelle la pièce peut être usinée en un endroit prévu à cet effet au moyen de l'outil d'usinage (20) placé en remplacement dans le porte-outil (7) du poste d'usinage (6),
et/ou
- l'unité de déplacement (12) est déplacée dans une position de service sous la forme d'une position de changement d'outil définie par le dispositif de commande (22) de l'entraînement (21) de l'unité de déplacement (12), et par suite le magasin d'outils (19) lié en déplacement à l'unité de déplacement (12), est déplacée dans une position dans laquelle, au poste d'usinage (6), un outil d'usinage (20) à placer en remplacement peut être transféré de l'emplacement de stockage (18) du magasin d'outils (19) au porte-outil (7) du poste d'usinage (6), ou un outil d'usinage (20) à remplacer peut être transféré du porte-outil (7) du poste d'usinage (6) à l'emplacement de stockage (18) du magasin d'outils (19),
**caractérisé en ce que**
la position de préparation de l'unité de déplacement (12) est définie de manière variable par le dispositif de commande (22) de l'entraînement (21) de l'unité de déplacement (12) et la position de transfert du dispositif (23/1, 23/2) de manipulation d'outil est définie de manière variable par le dispositif de commande (27) de l'entraînement (26) du dispositif (23/1, 23/2) de manipulation d'outil, par le fait que la position de préparation de l'unité de déplacement (12) est définie par le dispositif de commande (22) de l'entraînement (21) de l'unité de déplacement (12) en fonction de la position de service de l'unité de déplacement (12) avant la position de préparation et/ou en fonction de la position de service de l'unité de déplacement (12) après la position de préparation, et par le fait que la position de transfert du dispositif (23/1, 23/2) de manipulation d'outil est définie par le dispositif de commande (27) de l'entraînement (26) du dispositif (23/1, 23/2) de manipulation d'outil en fonction de la position de préparation définie au moyen du dispositif de commande (22) de l'entraînement (21) de l'unité de déplacement (12).

10. Programme d'usinage pour l'exploitation d'une machine-outil selon l'une des revendications 1 à 8, sachant qu'il est prévu une commande (28) numérique de machine avec un dispositif de commande (22) numérique pour l'entraînement (21) de l'unité de déplacement (12) et avec un dispositif de commande (27) numérique pour l'entraînement (26) du dispositif (23/1, 23/2) de manipulation d'outil, **caractérisé en ce que** le programme d'usinage comprend des ordres de commande pour l'entraînement (21) de l'unité de déplacement (12) et des ordres de commande pour l'entraînement (26) du dispositif (23/1, 23/2) de manipulation d'outil, qui ont pour effet que le procédé selon la revendication 9 est exécuté lorsque le programme d'usinage s'exécute sur la commande (28) numérique de machine.

11. Procédé pour générer un programme d'usinage selon la revendication 10, **caractérisé en ce qu'**on génère des ordres de commande pour l'entraînement (21) de l'unité de déplacement (12) et pour l'entraînement (26) du dispositif (23/1, 23/2) de manipulation d'outil, qui ont pour effet que le procédé selon la revendication 9 est exécuté lorsque le programme d'usinage s'exécute sur la commande (28) numérique de machine.

12. Produit-programme informatique, qui présente des moyens de codage qui sont adaptés pour exécuter toutes les étapes du procédé selon la revendication 11 destiné à générer un programme d'usinage, lorsque le produit-programme informatique est exploité sur une installation de traitement de données.
